# EUROPÄISCHE PATENTSCHRIFT

(11) **EP 0 712 683 B1**
(45) Veröffentlichungstag und Bekanntmachung des Hinweises auf die Patenterteilung: **20.01.1999**
(21) Anmeldenummer: 95115301.4
(22) Anmeldetag: 28.09.1995
(51) Int. Cl.: B23Q 1/25, B23C 1/00, B23Q 1/01

(54) **Werkzeugmaschine, insbesondere Bohr- und Fräsmaschine**
Machine tool, especially boring and drilling machine
Machine-outil, en particulier perceuse-fraiseuse

(30) Priorität: 19.11.1994 DE 4441253
(43) Veröffentlichungstag der Anmeldung: 22.05.1996
(73) Patentinhaber: MASCHINENFABRIK BERTHOLD HERMLE AKTIENGESELLSCHAFT, D-78559 Gosheim (DE)
(72) Erfinder: Braun, Hans-Dieter, D-78665 Frittlingen (DE)
(74) Vertreter: Vetter, Hans, Dipl.-Phys. Dr.

(56) Entgegenhaltungen:
- WO-A-85/03893
- DE-A- 2 902 920
- FR-A- 2 585 276
- US-A- 3 564 970

## Beschreibung

Die Erfindung betrifft eine Werkzeugmaschine, insbesondere Bohr- und Fräsmaschine, mit den Merkmalen des Oberbegriffs des Anspruchs 1.

Bei einem weitverbreiteten Typ einer z. B. aus der DE 42 03 994 bekannten Fräsmaschine bewegt sich der Schlitten in der Längsrichtung, und der Bearbeitungskopf ist am Schlitten vertikal bewegbar angeordnet. Eine Bewegung in der Querrichtung erfolgt durch den entsprechend angetriebenen Werkstücktisch. Dessen Antrieb im unteren Bereich der Maschine muß in aufwendiger Weise gegen Bearbeitungsrückstände, wie Späne und Schmiermittel, geschützt werden. Bei einer größeren seitlichen Auslenkung des Werkstücktisches besteht die Gefahr einer wenn auch nur sehr geringen Verformung durch die eigene und die Werkstückmasse sowie die durch das Werkzeug einwirkenden Kräfte, so daß in der Praxis der Werkstücktisch anstelle einer linearen Bewegungsbahn zum Ausgleich der Verformung eine kreisbahnartige Bahn mit einem Radius von einigen Kilometern besitzt, um hochpräzise Fräsarbeiten ausführen zu können. Hierdurch wird der Bewegungsapparat insbesondere für den Werkstücktisch bei hochpräzisen Fräsmaschinen sehr aufwendig und teuer.

Es sind auch sogenannte Gantry-Bauformen von Fräsmaschinen bekannt, bei denen der den Bearbeitungskopf tragende Längsschlitten auf zwei parallelen Schienen geführt ist, die an der Oberseite zweier Seitenwandungen des Maschinenständers angeordnet sind. Eine solche Fräsmaschine der eingangs genannten Gattung ist beispielsweise aus der WO-A-8503893 bekannt. Der Längsschlitten ist dabei über vier Führungselemente an den beiden Führungsschienen geführt. Diese bekannte Ausführung hat den Nachteil, daß bei größer werdender seitlicher Auslenkung des Bearbeitungskopfes zu einer der Seitenwandungen hin und bei einem gleichzeitigen Vorschub des Längsschlittens während einer Bearbeitungsphase ein Drehmoment auf den Längsschlitten einwirkt, das für präzise Fräsarbeiten einen doppelten Antrieb an beiden Führungsschienen erforderlich macht, wobei die beiden Antriebe exakt synchronisiert oder gekoppelt sein müssen. Hierzu sind beispielsweise zwei Vorschubspindeln mit entsprechenden Lagern sowie zwei Motoren oder ein Motor mit einem Verbindungsgetriebe erforderlich, da sich bei einseitig angetriebenem, als Verfahrbrücke ausgebildetem Längsschlitten durch Verdrehen hohe Querkraftresultierende auf die Führungselemente ergeben. Die Verfahrbrücke hat mit ihrer Vierpunktführung ein schlechtes Führungsverhältnis. Der erforderliche synchronisierte Antrieb an beiden Führungsschienen macht diese Bauform aufwendig und teuer.

Der Erfindung liegt daher die Aufgabe zugrunde, eine insbesondere als Bohr- und Fräsmaschine ausgebildete Werkzeugmaschine der eingangs genannten Gattung zu schaffen, bei der ähnlich einer Gantry-Bauform alle Antriebselemente, Führungen und Lager oberhalb des Schmutz-, Kühlmittel- und Schmiermittelbereichs angeordnet sind, bei der jedoch der Längsschlitten bei gleicher oder höherer Bearbeitungspräzision mit einer einfacheren und kostengünstigeren Antriebsvorrichtung auskommt.

Diese Aufgabe wird erfindungsgemäß durch die Merkmale des Anspruchs 1 gelöst.

Zunächst weist die erfindungsgemäße Werkzeugmaschine alle Vorteile einer "Gantry"-Bauform auf. Sämtliche Hauptarbeitsbewegungen werden vom Werkzeug ausgeführt, während das zu bearbeitende Werkstück im Maschinenständer ruht. Hierdurch ist die bewegte Masse konstant, und die Werkzeugmaschine kann leicht an einen Palettenbahnhof bei einfachem Werkzeugwechsleranbau angebunden werden. Durch die ruhende Anordnung des zu bearbeitenden Werkstücks im Maschinenständer, also zwischen den beiden Seitenwandungen, befinden sich alle Antriebselemente, Führungselemente und Lager oberhalb des Werkstücks, also außerhalb des Schmutzbereichs, in dem Bearbeitungsrückstände, wie Späne, Schmiermittel und Kühlmittel, auftreten. Durch die Anordnung oberhalb des Maschinenständers sind alle Antriebselemente für Wartungszwecke leicht erreichbar und austauschbar. Die Wege des Kräfteflusses zwischen Werkzeug und Werkstück sind kurz und führen zu einer hohen Maschinensteifheit. Dabei wird eine kompakte Bauweise erreicht, das heißt kleine Abmaße bei großen Verfahrbereichen. Die Maschine besteht aus wenigen Bauteilen und kann auf einfache Weise verkleidet werden. Durch die Dreipunktlagerung des als Spannbrücke ausgebildeten Längsschlittens wird eine leichtgewichtigere Bauform erreicht, und es wird nur ein einziger zentraler Antrieb an oder im Bereich der mittleren Führungsschiene benötigt, was zu einer deutlichen Kostenreduzierung gegenüber den bekannten Anordnungen führt. Da der Antrieb direkt am mittleren Führungselement erfolgt, befindet er sich unmittelbar am Wegmeßsystem, was zu einer guten Bearbeitungspräzision führt. Die resultierenden Kräfte, die durch Verdrehen bei außermittiger Belastung des Längsschlittens entstehen, wirken senkrecht auf die Führungselemente, wodurch die auftretenden Kräfte besser aufgenommen werden. Auch dies führt zu einer Erhöhung der Bearbeitungspräzision bzw. zu einem kostengünstigeren und einfacheren Aufbau der Führungselemente und Führungsschienen.

Durch die in den Unteransprüchen aufgeführten Maßnahmen sind vorteilhafte Weiterbildungen und Verbesserungen der im Anspruch 1 angegebenen Werkzeugmaschine möglich.

Alle drei Führungsschienen sind zweckmäßigerweise in derselben horizontalen Ebene angeordnet und können daher nach der Rohherstellung des Maschinenständers auf einfache Weise nach dem Einspannen desselben in einer größeren Bearbeitungsmaschine präzise von dieser geschliffen werden.

Die mittlere Führungsschiene ist wenigstens zum Teil auf einer die beiden Seitenwandungen an ihren einen Endbereichen verbindenden Querwandung angeordnet, die zur Erhöhung der Formsteifigkeit des Maschinenständers beiträgt. Dabei weist die Querwandung zweckmäßigerweise an ihrer dem Bearbeitungsbereich gegenüberliegenden Seite einen mittigen Fortsatz in der Längsrichtung des Maschinenständers auf, der als Unterlage für die mittlere Führungsschiene dient und zum Teil das Gewicht des Längsschlittens aufnimmt.

Zur exakten Fixierung und Ausrichtung eines Werkstücktisches weist der Bearbeitungsbereich an den Seitenwandungen Auflageflächen für diesen auf. Die Auflageflächen sind dabei in vorteilhafter Weise als vom Bearbeitungskopf bearbeitete Flächen ausgebildet, die dadurch in einer zur Bewegungsebene des Längsschlittens exakt parallelen Ebene liegen. Die Fixierung des Werkstücktisches erfolgt dabei an einer besonders formsteifen Stelle des Maschinenständers.

Der Bearbeitungsbereich weist an seinem untersten Endbereich eine Auswurföffnung für Bearbeitungsrückstände und Schmiermittel auf, die schwerkraftbedingt automatisch durch die Auswurföffnung fallen. Dies wird noch durch eine trichterartige Verjüngung der seitlichen Begrenzungsflächen des Bearbeitungsbereichs zur Auswurföffnung hin unterstützt.

Unterhalb der Auswurföffnung ist zweckmäßigerweise ein Auffangbehälter und/oder eine Wegführeinrichtung wenigstens für die Bearbeitungsrückstände vorgesehen.

Um eine Bewegung des Bearbeitungskopfes bzw. des daran angeordneten Werkzeugs in allen drei Bewegungsrichtungen zu gewährleisten, ist der Bearbeitungskopf motorisch vertikal verfahrbar an einem Querschlitten angeordnet, der am Längsschlitten in der Querrichtung motorisch verfahrbar geführt ist.

Auf Grund der komplexen und kompakten Form des ein Maschinenbett bildenden Maschinenständers kann dieser in vorteilhafter Weise aus einem Mineralgußmaterial bestehen, insbesondere aus Polymerbeton. Hierdurch kann bei guter Formsteifigkeit und Festigkeit eine Kostenreduzierung, ein präzises Abformen und eine vorteilhaftere Bearbeitung erreicht werden.

Die Seitenwandungen können in vorteilhafter Weise zusätzlich als Träger für Werkstück-Halteeinrichtungen, wie Schwenktische, verwendet werden, wobei insbesondere an jeder der beiden Seitenwandungen eine Befestigungsstelle für wenigstens eine Werkstück-Halteeinrichtung vorgesehen ist, wobei die beiden Befestigungsstellen in einer horizontalen Linie quer zur Längsrichtung der Führungsschiene fluchten. Die Befestigungsstellen sind dabei zweckmäßigerweise als Aufnahmeausnehmungen ausgebildet, vorzugsweise als Durchbrüche mit kreisförmigem oder mehreckigem Querschnitt. Derartige Aufnahmeausnehmungen können beispielsweise zusammen mit den Führungsschienen bei einmal eingespanntem Maschinenständer feinbearbeitet werden, so daß sie eine exakte Zuordnung zueinander aufweisen. Derartige Werkstück-Halteeinrichtungen können in den Aufnahmeausnehmungen motorisch oder manuell drehbar gelagert sein, so daß beispielsweise ein Bearbeiten einer in zwei Achsen geneigten Fläche möglich ist. Dabei liegen die beim Fräsen auftretenden Kräfte nahe an der Querführung in den Aufnahmeausnehmungen, so daß der Kraftflußweg besonders gering ist.

Eine zweckmäßige Ausgestaltung einer Werkstück-Halteeinrichtung besteht aus einem motorisch drehbaren Spannfutter einerseits und einem Gegenlager, wie einer Drehspitze, andererseits, die an oder in den beiden Befestigungsstellen montiert werden. Hierdurch erhält man einen Teilapparat mit Gegenhalter.

Alternativ hierzu kann auch ein Werkstücktisch oder eine mehrere Aufspannflächen aufweisende Werkstück-Halteeinrichtung an oder in den beiden Befestigungsstellen drehbar gelagert werden, wobei wenigstens eine der Befestigungsstellen einen motorischen Drehantrieb oder eine manuelle Drehverstelleinrichtung besitzt. Die Werkstück-Halteeinrichtung kann walzenartig mit einem vieleckigen Querschnitt ausgebildet sein, wobei an jeder Außenfläche Werkstücke aufgespannt und durch entsprechendes Drehen der Werkstück-Halteeinrichtung nacheinander bearbeitet werden können. Der Werkstücktisch kann auch über hebelartige Halteelemente mit Drehlagern an oder in den Befestigungsstellen verbunden und zur Drehachse versetzt angeordnet sein.

Die als Aufnahmeausnehmungen ausgebildeten Befestigungsstellen dienen insbesondere zur Aufnahme oder Verankerung der Drehlager und/oder der motorischen Drehantriebe für die Werkstück-Halteeinrichtungen. Die motorischen Drehantriebe sind dabei vorzugsweise an der oder den Außenseiten der Seitenwandungen angeordnet, so daß sie außerhalb des Arbeitsbereiches keinen Bearbeitungsrückständen sowie Schmier- und Kühlmitteln ausgesetzt sind. Darüber hinaus sind sie für Wartungs- und Reparaturarbeiten leicht zugänglich.

Die verschiedenen Werkstück-Halteeinrichtungen sind auswechselbar an den Befestigungsstellen anbringbar, so daß sich jede Maschine kundenindividuell konfigurieren und auch nachrüsten läßt. In der einfachsten Ausführung ist dann lediglich ein an den Auflageflächen der Seitenwandungen fest verankerter Werkstücktisch vorgesehen. Der Arbeitsbereich bleibt bei allen optionalen Werkstück-Halteeinrichtungen nahezu uneingeschränkt erhalten.

Die Aufnahmeausnehmungen sind vorzugsweise mit metallischen, im Maschinenständer aus Mineralgußmaterial verankerten oder vergossenen Lagerbuchsen versehen, so daß zusätzliche Gußgehäuse für die Lagerungen eingespart werden können. Diese Lagerbuchsen werden in der bereits beschriebenen Weise zusammen mit den Längsführungen bei fest eingespanntem Maschinenständer bearbeitet, um eine exakte Zuordnung zu erreichen.

Ausführungsbeispiele der Erfindung sind in der Zeichnung dargestellt und in der nachfolgenden Beschreibung näher erläutert. Es zeigen:
- Fig. 1: ein Ausführungsbeispiel einer als Bohr- und Fräsmaschine ausgebildeten Werkzeugmaschine in einer Seitenansicht,
- Fig. 2: dieselbe Maschine in einer Vorderansicht,
- Fig. 3: dieselbe Maschine in einer Ansicht von oben bei nur strichpunktiert dargestelltem Längsschlitten, wobei der Querschlitten und der Bearbeitungskopf zur Vereinfachung der Darstellung weggelassen wurden,
- Fig. 4: einen in die beiden Aufnahmeausnehmungen der Seitenwandungen eingesetzten, aus Spannfutter und Drehspitze bestehenden Teilapparat,
- Fig. 5: eine alternativ in die Aufnahmeausnehmungen einsetzbare Werkstück-Halteeinrichtung mit vier Aufspannflächen,
- Fig. 6: die in Fig. 5 dargestellte Werkstück-Halteeinrichtung in einer Querschittsdarstellung,
- Fig. 7: einen alternativ in die Aufnahmeausnehmungen einsetzbaren, motorisch drehbaren Werkstücktisch und
- Fig. 8: den in Fig. 7 dargestellten Werkstücktisch nach einer Drehung um 90° in der A-Achse.

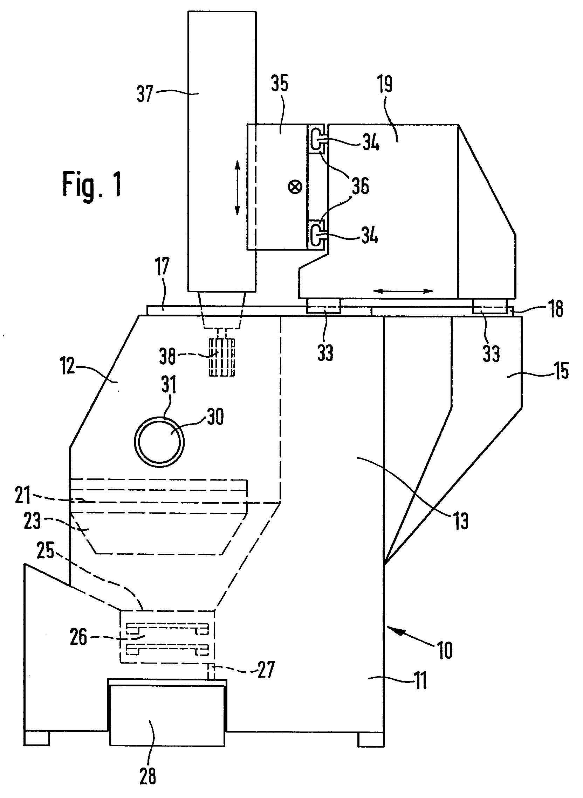

Die in den Fig. 1 bis 3 dargestellte Bohr- und Fräsmaschine kann selbstverständlich auch als reine Bohr- oder Schleifmaschine oder als kombiniertes Bearbeitungszentrum ausgebildet sein.

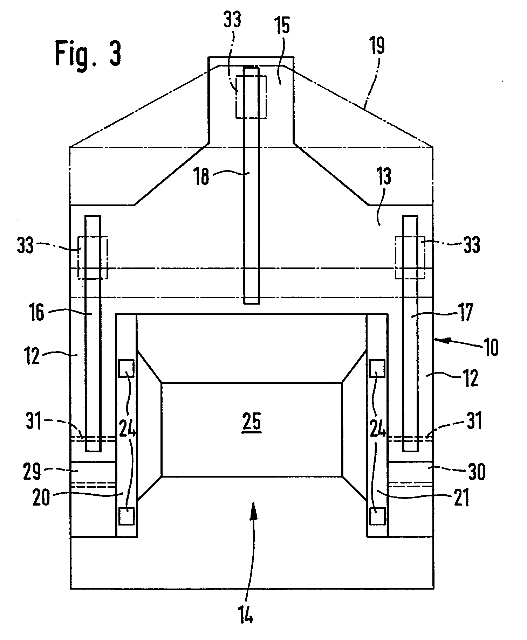

Ein ein Maschinenbett bildender Maschinenständer 10 besitzt einen unteren Basisbereich 11, von dem aus sich an zwei gegenüberliegenden Randbereichen zwei Seitenwandungen 12 nach oben erstrecken. Diese Seitenwandungen 12 sind an ihren einen Endbereichen über eine Querwandung 13 miteinander verbunden. Der von den Seitenwandungen 12 und der Querwandung 13 seitlich und von unten durch den Basisbereich 11 begrenzte Bereich bildet den Bearbeitungsbereich 14 der Bohr- und Fräsmaschine. Vom mittleren Bereich der Querwandung 13 aus erstreckt sich auf der dem Arbeitsbereich 14 gegenüberliegenden Seite ein mittiger Fortsatz 15 nach hinten, so daß die Querwandung 13 zusammen mit dem mittigen Fortsatz 15 gemäß Fig. 3 eine angenähert dreieckige Oberseite aufweist.

Auf den beiden Seitenwandungen 12 sind zwei parallele Führungsschienen 16, 17 in der Längsrichtung dieser Seitenwandungen 12 bzw. in der Längsrichtung des Maschinenständers 10 fixiert. Eine dritte Führungsschiene 18 ist zwischen den Führungsschienen 16, 17 und parallel zu diesen in der Längsrichtung versetzt auf dem mittigen Fortsatz 15 und der Querwandung 13 fixiert. Diese drei Führungsschienen 16 - 18 sind in derselben horizontalen Ebene angeordnet, jedoch ist es beispielsweise auch möglich, die dritte Führungsschiene 18 in einer anderen Ebene anzuordnen oder als Doppelführungsschiene auszubilden. Ein auf den Führungsschienen 16 - 18 geführter und noch zu beschreibender Längsschlitten 19 muß dann entsprechend angepaßt sein.

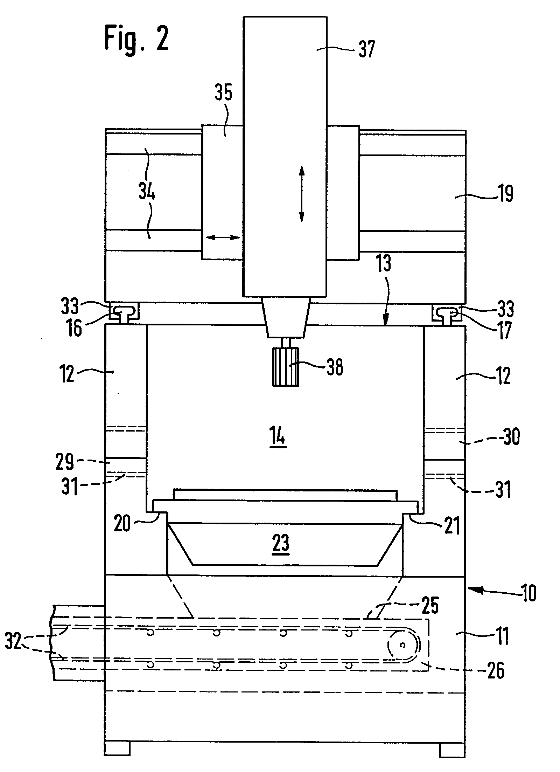

Die einander gegenüberliegenden Innenseiten der Seitenwandungen 12 weisen in ihrem unteren Bereich jeweils einen Absatz 20, 21 auf, wobei diese Absätze 20, 21 als seitliche Auflageflächen für einen Werkstücktisch 23 dienen, der in seiner Auflageposition gemäß Fig. 2 in nicht dargestellter Weise fest am Maschinenständer 10 fixierbar ist und zum Aufspannen von zu bearbeitenden Werkstücken dient. Die beiden Absätze 20, 21 weisen hierzu vier präzise bearbeitete Auflagestellen 24 auf, die exakt parallel zu den Führungsschienen 16 - 18 angeordnet sein müssen.

Unterhalb der Ebene der Auflagestellen 24 verjüngt sich der Innenraum des Maschinenständers 10 trichterartig bis zu einer unteren Auswurföffnung 25 hin. Unterhalb der Auswurföffnung 25 besitzt der Maschinenständer 10 einen Entsorgungskanal 26, der gemäß Fig. 1 über eine (oder mehrere) Ablaßleitung 27 mit einer Ausnehmung zur Aufnahme eines Ablaßbehälters 28 für Schmier- und Kühlmittel gemäß Fig. 1 verbunden ist.

In jeder der Seitenwandungen 12 ist oberhalb der Ebene der Auflagestellen 24 je eine durchgehende Aufnahmeausnehmung 29, 30 eingeformt, wobei die beiden Aufnahmeausnehmungen 29, 30 in einer horizontalen Linie quer zur Längsrichtung der Führungsschienen fluchten. In die beiden Aufnahmeausnehmungen 29, 30 sind Lagerbuchsen 31 eingesetzt.

Der Maschinenständer 10 besteht aus einem Mineralgußmaterial, beispielsweise aus Polymerbeton, wobei lediglich die Führungsschienen 16 - 18, die Auflagestellen 24 und die Lagerbuchsen 31 aus Stahl bestehen. Diese Stahlteile werden beim Guß des Maschinenständers 10 miteingegossen oder später in entsprechende Einformungen eingesetzt und verankert. Der Maschinenständer 10 wird nun zur Feinbearbeitung in eine nicht dargestellte Bearbeitungsmaschine eingespannt, die dann die Gleit- und Führungsflächen der Führungsschienen 16 - 18 zueinander parallel und in einer exakten Ebene bearbeitet. Weiterhin werden die Lagerbuchsen 31 in einer exakten senkrechten Zuordnung zu den Führungsschienen feinbearbeitet. Da diese Bearbeitungsvorgänge von außen her erfolgen können, ist eine einfache Bearbeitung möglich. Selbstverständlich ist auch eine Realisierung des Maschinenständers 10 als Metallständer möglich. Beim Guß des Maschinenständers 10 können zur Einsparung von Material nicht dargestellte Hohlräume gebildet werden.

Im Entsorgungskanal 26 ist ein Entsorgungstransportband 32 angeordnet, das die herabfallenden Späne beim Bearbeiten oder andere Bearbeitungsrückstände seitlich zu einer nicht dargestellten Entsorgungseinrichtung abführt. In einem einfacheren Fall kann anstelle eines Entsorgungstransportbandes 32 auch ein Sammelbehälter im Entsorgungskanal 26 angeordnet sein. Das Schmier- und Kühlmittel fließt dabei jeweils über die Ablaßleitung 27 zum Ablaßbehälter 28. Von diesem aus wird das Schmier- und Kühlmittel in üblicher, nicht dargestellter Weise nach entsprechender Filterung wieder dem Kühl - und Schmiermittelkreislauf der Fräsmaschine zugeführt.

Der Längsschlitten 19 ist mittels dreier Führungselemente 33 an den drei Führungsschienen 16 - 18 längsverschiebbar gelagert. Dabei sind die beiden äußeren Führungselemente an der Unterseite des vorderen Bereichs und das mittlere Führungselement im hinteren Bereich an der Unterseite mittig am Längsschlitten 19 angeordnet, so daß eine Dreipunktauflage erreicht wird. Ein nicht dargestellter motorischer Antrieb greift am mittleren Führungselement 33 an, wobei ein ebenfalls nicht dargestelltes Wegmeßsystem ebenfalls am mittleren Führungselement bzw. an der mittleren Führungsschiene 13 angeordnet ist.

Der Längsschlitten 19 weist an seiner Vorderseite zwei übereinander angeordnete Querschienen 34 auf, an denen ein Querschlitten 35 in der Querrichtung motorisch verfahrbar über Führungselemente 36 geführt ist. An diesem Querschlitten 35 ist ein Bearbeitungskopf 37 über einen nicht dargestellten motorischen Antrieb vertikal verfahrbar geführt, so daß insgesamt eine Bewegung von am Bearbeitungskopf 37 auswechselbar angeordneten Werkzeugen 38 in allen drei Verfahrrichtungen möglich ist.

Ein nicht dargestellter Werkzeugwechsler kann an einer der beiden Seitenwandungen 12 angeordnet sein und beispielsweise im Bereich der vorderen Schrägfläche der Seitenwandungen den jeweiligen Werkzeugwechsel vornehmen.

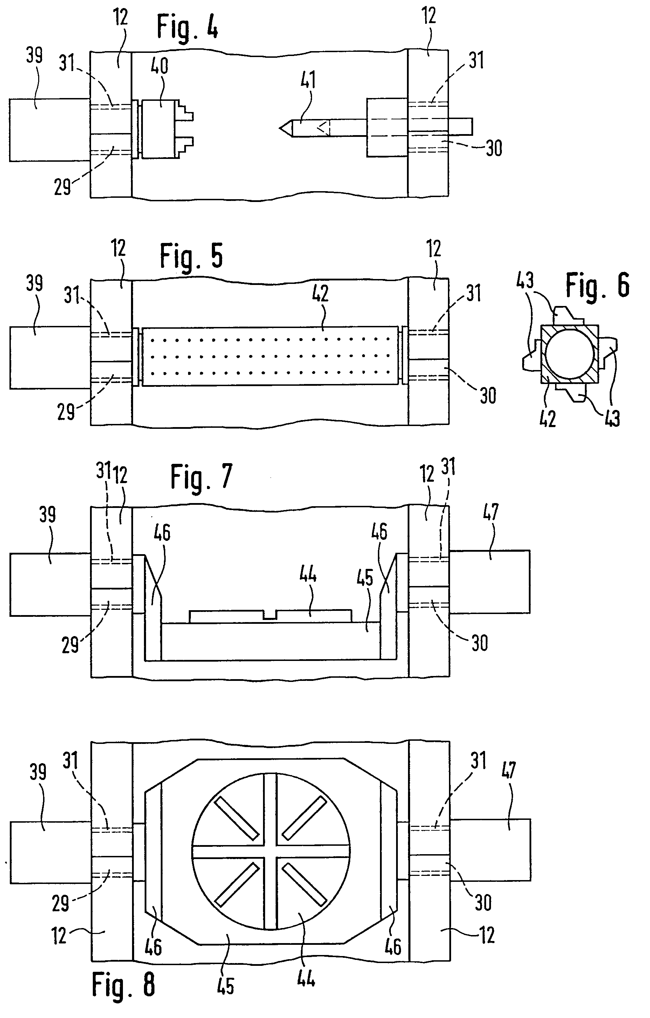

In die Aufnahmeausnehmungen 29, 30 bzw. in die dort angeordneten Lagerbuchsen 31 können wahlweise verschiedene Werkstück-Halteeinrichtungen eingesetzt werden, wie sie in den Fig. 4 bis 8 beispielhaft dargestellt sind. Hierdurch kann die Fräsmaschine in einer Grundausrüstung mit dem ortsfest angeordneten Werkstücktisch 23 ausgeliefert werden, und die zusätzlichen Werkstück-Halteeinrichtungen können optional gleich mitgeliefert oder später erworben und eingesetzt werden.

Eine erste, in die Lagerbuchsen 31 einsetzbare Werkstück-Halteeinrichtung ist in Fig. 4 dargestellt und betrifft einen Teilapparat. In der linken Lagerbuchse 31 ist ein mit einem motorischen Drehantrieb 39 versehenes Spannfutter 40 drehbar gelagert, wobei der motorische Drehantrieb 39 an der Außenseite des Maschinenständers 10 angeordnet ist. In der gegenüberliegenden Lagerbuchse 31 ist fluchtend eine Drehspitze 41 drehbar gelagert, die in einer Verstellrichtung zum Spannfutter 40 hin verstellbar ausgebildet ist. Ein zwischen Spannfutter 40 und Drehspitze 41 eingespanntes Werkstück kann auf diese Weise in verschiedenen gewünschten Winkellagen bearbeitet bzw. gefräst, gebohrt oder geschliffen werden. Das Spannfutter 40 mit dem motorischen Drehantrieb 39 sowie die Drehspitze 41 können schnell in die entsprechenden Lagerbuchsen 31 (auch in der umgekehrten Anordnung) eingesetzt und herausgenommen werden. Die erforderlichen Drehlager sind zum Bearbeitungsbereich hin abgedichtet.

In den Fig. 5 und 6 ist eine weitere Ausführung einer Werkstück-Halteeinrichtung dargestellt. Anstelle des Spannfutters 40 tritt nunmehr eine vier Aufspannflächen aufweisende Werkstück-Halteeinrichtung 42, die in beiden Lagerbuchsen 31 an ihren beiden Endbereichen drehbar gelagert ist und wiederum vom motorischen Drehantrieb 39 antreibbar ist. In Fig. 6 sind beispielhaft an allen vier Aufspannflächen Werkstücke 43 im aufgespannten Zustand dargestellt. In einer verkürzten Ausführung kann die Werkstück-Halteeinrichtung 42 auch nur einseitig gelagert sein, wobei auch beim in Fig. 4 dargestellten Teilapparat für verschiedene Anwendungen die Drehspitze 41 entbehrlich ist.

Bei der in den Fig. 7 und 8 dargestellten weiteren Werkstück-Halteeinrichtung ist ein mit einem Rundtisch 44 versehener Werkzeugtisch 45 mit an gegenüberliegenden Seiten angeordneten hebelartigen Halteelementen 46 versehen, über die der Werkzeugtisch 45 drehbar jeweils in den beiden Lagerbuchsen 31 gelagert ist. An jeder Außenseite der Lagerbuchsen 31 ist jeweils ein motorischer Drehantrieb 39, 47 angeordnet, wobei in einer einfacheren Ausführung auch ein einzelner motorischer Drehantrieb 39 ausreichen kann. Infolge der Halteelemente 46 ist der Werkzeugtisch 45 aus der Drehachse heraus versetzt. Bei auf dem Rundtisch 44 aufgespannten Werkstücken ist eine Fünf-Achs-Bearbeitung möglich.

Anstelle von motorischen Drehantrieben 49 bzw. 47 können auch manuell einstellbare Drehverstelleinrichtungen vorgesehen sein, durch die die jeweilige Werkstück-Halteeinrichtung in verschiedenen Bearbeitungswinkeln eingestellt werden kann.

Sind für die Drehbank mehrere der in den Fig. 4 bis 8 dargestellten Werkstück-Halteeinrichtungen oder weitere Werkstück-Halteeinrichtungen zum auswechselbaren Einsatz vorgesehen, so können auch verschiedene motorische Drehantriebe oder ein einziger motorischer Drehantrieb 39 für die verschiedenen Werkstück-Halteeinrichtungen verwendet werden. An dem in eine Lagerbuchse 31 eingesetzten und fixierten motorischen Drehantrieb 39 kann dann über dessen Drehlager die jeweilige Werkzeug-Halteeinrichtung auswechselbar angesetzt werden, so daß die optional einsetzbaren verschiedenen Werkstück-Halteeinrichtungen nach Art eines Baukastensystems ausgebildet sind.

In Abwandlung des in den Fig. 1 bis 3 dargestellten Ausführungsbeispiels kann selbstverständlich auch anstelle des Querschlittens 35 ein horizontal am Längsschlitten 19 verfahrbarer Vertikalschlitten treten, an dem der Bearbeitungskopf 37 in der Querrichtung verfahrbar geführt ist.

Weiterhin können die Aufnahmeausnehmungen 29, 30 anstelle eines kreisförmigen Querschnitts auch eine andere Querschnittsform, beispielsweise einen vieleckigen Querschnitt, aufweisen. Anstelle dieser Aufnahmeausnehmungen können auch prinzipiell anders konstruierte Befestigungsstellen treten, die dazu geeignet sind, verschiedene drehbare Werkstück-Halteeinrichtungen in entsprechender Weise zu halten.

## Patentansprüche

1. Werkzeugmaschine, insbesondere Bohr- und Fräsmaschine, mit einem Maschinenständer (10), auf dem ein an Führungsschienen geführter, motorisch angetriebener Längsschlitten (19) horizontal bewegbar ist, mit einem eine rotierende Antriebsvorrichtung für wenigstens ein Werkzeug (38) aufweisenden Bearbeitungskopf (37), der am Längsschlitten (19) in wenigstens einer weiteren Bewegungsrichtung motorisch bewegbar ist, wobei der Maschinenständer (10) zwei beabstandete Seitenwandungen (12) besitzt, deren Zwischenraum als Bearbeitungsbereich (14) zur Aufnahme wenigstens einer Werkstück-Halteeinrichtung (23; 40, 41; 42; 44, 45) ausgebildet ist, und wobei auf den beiden Seitenwandungen (12) zwei parallele Führungsschienen (16, 17) für den Längsschlitten (19) angeordnet sind, dadurch gekennzeichnet, daß eine dritte Führungsschiene (18) parallel und im wesentlichen mittig zwischen den beiden anderen Führungsschienen (17, 18) in Längsrichtung versetzt angeordnet ist und daß der Längsschlitten (19) über drei Führungselemente (33) an den drei Führungsschienen (16 - 18) geführt ist, wobei der motorische Antrieb an oder im Bereich der mittleren Führungsschiene (18) erfolgt.

2. Werkzeugmaschine nach Anspruch 1, dadurch gekennzeichnet, daß alle Führungsschienen (16 - 18) in derselben horizontalen Ebene angeordnet sind.

3. Werkzeugmaschine nach Anspruch 1 oder 2, dadurch gekennzeichnet, daß die mittlere Führungsschiene (18) wenigstens zum Teil auf einer die beiden Seitenwandungen (12) an ihren einen Endbereichen verbindenden Querwandung (13) angeordnet ist, die vorzugsweise an ihrer dem Bearbeitungsbereich (14) gegenüberliegenden Seite einen mittigen Fortsatz (15) in der Längsrichtung des Maschinenständers (10) aufweist, der als Unterlage für die mittlere Führungsschiene (18) dient.

4. Werkzeugmaschine nach einem der Ansprüche 1 bis 3, dadurch gekennzeichnet, daß der Bearbeitungsbereich (14) an den Seitenwandungen (12) Auflageflächen (24) für einen Werkstücktisch (23) aufweist, die insbesondere als vom Bearbeitungskopf (37) bearbeitete Flächen ausgebildet sind und dadurch in einer zur Bewegungsebene des Längsschlittens (19) parallelen Ebene liegen.

5. Werkzeugmaschine nach einem der vorhergehenden Ansprüche, dadurch gekennzeichnet, daß der Bearbeitungsbereich (14) an seinem untersten Endbereich eine Auswurföffnung (25) für Bearbeitungsrückstände, Schmier- und Kühlmittel aufweist, wobei sich die seitlichen Begrenzungsflächen des Bearbeitungsbereichs (14) zur Auswurföffnung (25) hin vorzugsweise trichterartig verjüngen und/oder wobei unterhalb der Auswurföffnung (25) ein Auffangbehälter und/oder eine Wegführeinrichtung (32) wenigstens für die Bearbeitungsrückstände vorgesehen ist.

6. Werkzeugmaschine nach einem der vorhergehenden Ansprüche, dadurch gekennzeichnet, daß der Bearbeitungskopf (37) motorisch vertikal oder in der Querrichtung verfahrbar an einem weiteren Schlitten (35) angeordnet ist, der am Längsschlitten (19) in der jeweils anderen Richtung motorisch verfahrbar geführt ist.

7. Werkzeugmaschine nach einem der vorhergehenden Ansprüche, dadurch gekennzeichnet, daß der Maschinenständer (10) aus einem Mineralgußmaterial besteht, insbesondere aus Polymerbeton.

8. Werkzeugmaschine nach einem der vorhergehenden Anmsprüche, dadurch gekennzeichnet, daß an jeder der beiden Seitenwandungen (12) eine insbesondere als Aufnahmeausnehmung ausgebildete Befestigungsstelle (29, 30) für wenigstens eine Werkstück-Halteeinrichtung (40, 41; 42; 44, 45) vorgesehen ist, wobei die beiden Befestigungsstellen (29, 30) in einer horizontalen Linie quer zur Längsrichtung der Führungsschienen (16 - 18) fluchten und wobei die Aufnahmeausnehmungen (29, 30) vorzugsweise als Durchbrüche mit kreisförmigem oder mehreckigem Querschnitt ausgebildet sind.

9. Werkzeugmaschine nach Anspruch 8, dadurch gekennzeichnet, daß ein motorisch drehbares Spannfutter (40) einerseits und ein Gegenlager (41), wie eine Drehspitze, andererseits zur Montage an oder in den beiden Befestigungsstellen (29, 30) ausgebildet sind oder daß ein Werkstücktisch (44, 45) oder eine mehrere Aufspannflächen aufweisende Werkstück-Halteeinrichtung (42) an oder in den beiden Befestigungsstellen (29, 30) drehbar gelagert und an wenigstens einer der Befestigungsstellen (29) einen motorischen Drehantrieb (39) oder eine manuelle Drehverstelleinrichtung besitzt.

10. Werkzeugmaschine nach Anspruch 9, dadurch gekennzeichnet, daß die Werkstück-Halteeinrichtung (42) walzenartig mit einem vieleckigen Querschnitt ausgebildet ist und der Werkstücktisch (44, 45) vorzugsweise über hebelartige Halteelemente (46) mit Drehlagern an oder in den Befestigungsstellen (29, 30) verbunden und insbesondere zur Drehachse versetzt angeordnet ist.

11. Werkzeugmaschine nach Anspruch 9 oder 10, dadurch gekennzeichnet, daß die als Aufnahmeausnehmungen ausgebildeten Befestigungsstellen (29, 30) zur Aufnahme oder Verankerung der Drehlager und/oder der motorischen Drehantriebe (39, 40) für die Werkstück-Halteeinrichtungen (40, 41; 42; 44, 45) vorgesehen sind und/oder daß die motorischen Drehantriebe (39, 47) an der oder den Außenseiten der Seitenwandungen (12) angeordnet sind.

12. Werkzeugmaschine nach einem der Ansprüche 9 bis 11, dadurch gekennzeichnet, daß verschiedene Werkstück-Halteeinrichtungen (40, 41; 42; 44, 45) auswechselbar an den Befestigungsstellen (29, 30) anbringbar sind.

13. Werkzeugmaschine nach einem der Ansprüche 8 bis 12, dadurch gekennzeichnet, daß die als Aufnahmeausnehmungen ausgebildeten Befestigungsstellen mit metallischen, im Maschinenständer (10) aus Mineralgußmaterial verankerten oder vergossenen Lagerbuchsen (31) versehen sind.

## Claims

1. Machine tool, in particular a drilling and milling machine, with a machine column (10) on which a motor-driven longitudinal slide (19) is horizontally movable, guided on guide rails (16, 17), and with a machining head (37) which has a rotating drive unit for one or more tools (38) and is movable by motor in at least one additional direction of movement, wherein the machine column (10) has two side walls (12) spaced apart, with their intermediate space forming the machining zone (14) to accommodate one or more workpiece holding devices (23; 40, 41; 42, 44, 45) and wherein two parallel guide rails (16, 17) for the longitudinal slide (19) are located on the two side walls (12), characterized in that a third guide rail (18) is arranged parallel and essentially centrally between the two other guide rails (17, 18) and offset longitudinally, and that the longitudinal slide (19) is guided on the three guide rails (16 - 18) through three guide elements (33), while the motor drive is effected on or in the area of the central guide rail (18).

2. Machine tool according to claim 1, characterized in that all guide rails (16 - 18) are located preferably in the same horizontal plane.

3. Machine tool according to claim 1 or 2, characterized in that the central guide rail (18) is located at least in part on one of the two side walls (12) at its transverse wall (13) connecting an end section and preferably having on that side of it opposite the machining zone (14) a central extension (15) in the longitudinal direction of the machine column (10), which serves as support for the central guide rail (18).

4. Machine tool according to any of claims 1 to 3, characterized in that the machining zone (14) has mounting surfaces (24) for a worktable (23) on the side walls (12), in particular in the form of surfaces machined by the machining head (37) and therefore lying in a plane parallel to the plane of movement of the longitudinal slide (19).

5. Machine tool according to any of the preceding claims, characterized in that the machining zone (14) has on its lowest end section an ejection orifice (25) for machining residues, lubricant and coolant, wherein the side boundary areas of the machining zone (14) taper preferably funnel-like towards the ejection orifice (25) and/or wherein a collection vessel and/or a disposal unit (32) for at least the machining residues is provided beneath the ejection orifice (25).

6. Machine tool according to any of the preceding claims, characterized in that the machining head (37) is mounted, capable of vertical or horizontal motorized movement, on a further slide (35) which is guided on the longitudinal slide (19) with motorized movement in the other respective direction.

7. Machine tool according to any of the preceding claims, characterized in that the machine column (10) is made of a mineral cast material, in particular polymer concrete.

8. Machine tool according to any of the preceding claims, characterized in that on each of the two side walls (12) there is provided a fixing point (29, 30), in particular in the form of a mounting recess, for one or more workpiece holding fixtures (40, 41; 42; 44, 45), wherein the two fixing points (29, 30) are aligned in a horizontal line at right-angles to the longitudinal direction of the guide rails (16-18), and wherein the mounting recesses (29, 30) are preferably in the form of through holes of circular or polygonal cross-section.

9. Machine tool according to claim 8, characterized in that a motor-driven chuck (40) on the one hand, and a counter-support (41), such as a rotating tip, on the other hand, are designed for fitting on or in the two fixing points (29, 30), or that a worktable (44, 45) or a workpiece holding fixture (42) with several workholding areas is pivotably mounted on or in the two fixing points (29, 30) and has a motorized rotary drive (39) or a manual rotary adjuster on at least one of the fixing points (29).

10. Machine tool according to claim 9, characterized in that the workpiece holding fixture (42) is cylindrical with a polygonal cross-section, and the worktable (44, 45) is preferably connected via lever-type holding elements (46) to pivot bearings on or in the fixing points (29, 30), and in particular is arranged offset to the axis of rotation.

11. Machine tool according to claim 9 or 10, characterized in that the fixing points (29, 30) in the form of mounting recesses are provided to hold or anchor the pivot bearings and/or the motor-driven rotary drives (39, 40) for the workpiece holding fixtures (40, 41; 42; 44, 45) and/or that the motor-driven rotary drives (39, 47) are located on the outer side or sides of the side walls (12).

12. Machine tool according to any of claims 9 to 11, characterized in that various workpiece holding fixtures (40, 41; 42; 44, 45), may be interchangeably attached at the fixing points (29, 30).

13. Machine tool according to any of claims 8 to 12, characterized in that the fixing points in the form of mounting recesses are provided with metal bearing bushes (31), anchored or cast in the machine column (10) of mineral cast material.

## Revendications

1. Machine-outil, en particulier perceuse-fraiseuse, comportant un bâti de machine (10), sur lequel est déplaçable horizontalement un chariot longitudinal (19) entraîné par moteur, guidé sur des rails de guidage, comportant une tête d'usinage (37) présentant un dispositif d'entraînement rotatif pour au moins un outil (38), laquelle tête d'usinage est déplaçable de manière motorisée sur le chariot longitudinal (19), dans au moins une autre direction de déplacement, le bâti de machine (10) possédant deux parois latérales (12) espacées, dont l'espace intermédiaire est réalisé en tant que zone d'usinage (14) destinée à recevoir au moins un dispositif porte-pièce (23; 40, 41; 42, 44, 45), et sur les deux parois latérales (12) étant disposés deux rails de guidage (16, 17) parallèles pour le chariot longitudinal (19), caractérisée en ce qu'un troisième rail de guidage (18) est disposé décalé dans la direction longitudinale, parallèlement et sensiblement au milieu entre les deux autres rails de guidage (17, 18) et en ce que le chariot longitudinal (19) est guidé, par trois éléments de guidage (33), sur les trois rails de guidage (16 à 18), l'entraînement par moteur s'effectuant sur ou dans la région du rail de guidage central (18).

2. Machine-outil selon la revendication 1, caractérisée en ce que tous les rails de guidage (16 à 18) sont disposés dans le même plan horizontal.

3. Machine-outil selon la revendication 1 ou 2, caractérisée en ce que le rail de guidage central (18) est disposé au moins en partie sur une paroi transversale (13), reliant les deux parois latérales (12) dans l'une de leurs zones d'extrémité, laquelle paroi transversale présente de préférence, sur son côté faisant face à la zone d'usinage (14), un prolongement central (15) dans la direction longitudinale du bâti de machine (10), qui sert de support au rail de guidage central (18).

4. Machine-outil selon l'une des revendications 1 à 3, caractérisée en ce que la zone d'usinage (14) présente, sur les parois latérales (12), des surfaces d'appui (24) pour une table porte-pièce (23), qui sont formées de préférence en tant que surfaces usinées par la tête d'usinage (37), et qui se situent de ce fait dans un plan parallèle au plan de déplacement du chariot longitudinal (19).

5. Machine-outil selon l'une des revendications précédentes, caractérisée en ce que la zone d'usinage (14) présente, dans sa zone d'extrémité la plus basse, une ouverture d'éjection (25) pour des déchets d'usinage, le lubrifiant et l'agent de refroidissement, les surfaces de délimitation latérales de la zone d'usinage (14) se rétrécissant de préférence en entonnoir vers l'ouverture d'éjection (25) et/ou un récipient de collecte et/ou un dispositif d'évacuation (32) étant prévu au-dessous de l'ouverture d'éjection (25), au moins pour les déchets d'usinage.

6. Machine-outil selon l'une des revendications précédentes, caractérisée en ce que la tête d'usinage (37) est disposée de manière à pouvoir se déplacer au moyen d'un moteur, verticalement ou dans la direction transversale, sur un autre chariot (35), qui est monté déplaçable par un moteur sur le chariot longitudinal (19), dans l'autre direction.

7. Machine-outil selon l'une des revendications précédentes, caractérisée en ce que le bâti de machine (10) est constitué d'un matériau en fonte minérale, en particulier en béton de polymère.

8. Machine-outil selon l'une des revendications précédentes, caractérisée en ce que sur chacune des deux parois latérales (12) est prévu un point de fixation (29, 30), réalisé en particulier en tant qu'évidement formant logement, pour au moins un dispositif porte-pièce (40, 41; 42; 44, 45), les deux points de fixation (29, 30) étant alignés sur une ligne horizontale, transversalement à la direction longitudinale des rails de guidage (16 à 18) et les évidements formant logement (29, 30) étant réalisés de préférence en tant qu'ajours de section circulaire ou polygonale.

9. Machine-outil selon la revendication 8, caractérisée en ce que d'une part un mandrin de serrage (40) pouvant tourner au moyen d'un moteur et d'autre part un contre-palier (41), tel qu'une pointe de rotation, sont conçus pour être montés sur ou dans les deux points de fixation (29, 30) ou en ce qu'une table porte-pièce (44, 45) ou un dispositif porte-pièce (42), présentant plusieurs surfaces de bridage, est monté(e) tournant sur ou dans les deux points de fixation (29, 30) et possède un dispositif d'entraînement en rotation (39) motorisé ou un dispositif manuel de mise en rotation, sur au moins l'un des points de fixation (29).

10. Machine-outil selon la revendication 9, caractérisée en ce que le dispositif porte-pièce (42) est du genre tambour avec une section polygonale et la table porte-pièce (44, 45) est reliée, de préférence, par des éléments de maintien (46) du genre levier, à des paliers de rotation sur ou dans les points de fixations (29, 30) et est disposée en particulier décalée par rapport à l'axe de rotation.

11. Machine-outil selon la revendication 9 ou 10, caractérisée en ce que les points de fixation (29, 30), réalisés en tant qu'éléments formant logement, sont prévus pour la réception ou l'ancrage des paliers de rotation et/ou des dispositifs d'entraînement en rotation (39, 40) motorisés pour les dispositifs porte-pièce (40, 41; 42; 44, 45) et/ou en ce que les dispositifs d'entraînement motorisés (39, 47) sont disposés sur le ou les côté(s) extérieur(s) des parois latérales (12).

12. Machine-outil selon l'une des revendications 9 à 11, caractérisée en ce que différents dispositifs porte-pièce (40, 41; 42; 44, 45) peuvent être montés de manière interchangeable aux points de fixation (29, 30).

13. Machine-outil selon l'une des revendications 8 à 12, caractérisée en ce que les points de fixation, réalisés en tant qu'évidements formant logement, sont pourvus de douilles de palier (31) métalliques, ancrées ou coulées dans le bâti de machine (10) en fonte minérale.
